(19) Europäisches Patentamt
European Patent Office
Office européen des brevets

(11) EP 0 978 531 B1

(12) EUROPÄISCHE PATENTSCHRIFT

(45) Veröffentlichungstag und Bekanntmachung des Hinweises auf die Patenterteilung:
**19.02.2003 Patentblatt 2003/08**

(51) Int Cl.[7]: **C08L 21/00**, C08L 19/00, C08K 5/54

(21) Anmeldenummer: **99114743.0**

(22) Anmeldetag: **28.07.1999**

# (54) Kautschukmischung

Rubber composition

Composition de caoutchouc

(84) Benannte Vertragsstaaten:
**AT BE CH CY DE DK ES FI FR GB GR IE IT LI LU MC NL PT SE**

(30) Priorität: **01.08.1998 DE 19834804**

(43) Veröffentlichungstag der Anmeldung:
**09.02.2000 Patentblatt 2000/06**

(73) Patentinhaber: **Continental Aktiengesellschaft 30165 Hannover (DE)**

(72) Erfinder:
- **Obrecht, Werner, Dr.**
  **47447 Moers (DE)**
- **Scholl, Thomas, Dr.**
  **51469 Bergisch Gladbach (DE)**
- **Wendling,Peter**
  **51357 Leverkusen (DE)**
- **Well, Michael, Dr.**
  **38159 Vechelde (DE)**
- **Monroy, Victor, Dr.**
  **Charlotte, NC 28270 (US)**

(56) Entgegenhaltungen:
**EP-A- 0 854 170**

- **DATABASE WPI Section Ch, Week 199108 Derwent Publications Ltd., London, GB; Class A18, AN 1991-055763 XP002122683 & JP 03 007602 A (TOYO RUBBER IND CO LTD), 14. Januar 1991 (1991-01-14)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 978 531 B1

Printed by Jouve, 75001 PARIS (FR)

## Beschreibung

Die Erfindung betrifft eine Kautschukmischung, die zumindest eine Kautschukkomponente und zumindest einen ersten Füllstoff, dessen Oberfläche nucleophile Gruppen, insbesondere Hydroxylgruppen, aufweist sowie weiterhin übliche Zusatzstoffe enthält.

Kautschukmischungen werden für die Herstellung von Gummiprodukten verschiedenster Anwendungen verwendet. Je nach dem Einsatzgebiet werden auch unterschiedliche Anforderungen an die entsprechende Kautschukmischung gestellt. So enthält die Kautschukmischung außer den Kautschukkomponenten weitere Bestandteile wie z. B. Füllstoffe, Alterungsschutzmittel und Vulkanisationsmittel, die wesentlich die Eigenschaften des fertigen Gummiproduktes beeinflussen. Es müssen daher geeignete Systeme Polymer/weitere Bestandteile bereitgestellt werden, um die entsprechenden Eigenschaften des Gummiproduktes zu erhalten. Den Füllstoffen kommt in einer Kautschukmischung wesentliche Bedeutung zu. So tragen sie nicht nur zur Verbilligung von Kautschukmischungen bei, sondern wird ihre spezifische Wirkung auf den Kautschuk ausgenutzt. Daher hat es nicht an Versuchen gemangelt z. B. unterschiedlichste Füllstoffe in die Kautschukmischung einzumischen. So sind als Füllstoffe z. B. Ruß und Kieselsäure bekannt. Es konnte beobachtet werden, daß Gummiprodukte, die als Füllstoff z. B. Ruß enthalten eine ausreichende mechanische Belastbarkeit besitzen, jedoch tritt bei Verwendung dieser Mischungen in Reifenlaufstreifen der Nachteil auf, daß die entsprechenden Reifen einen hohen Rollwiderstand und ein schlechtes Naßrutschverhalten zeigen. Dieses Problem wurde dadurch versucht zu lösen, in die Laufstreifenmischung Kieselsäure einzumischen, wobei zur Anbindung an das Polymer wiederum ein Füllstoffaktivator erforderlich ist. Allerdings konnte beobachtet werden, daß Gummiprodukte, die als Füllstoff Kieselsäure und als Füllstoffaktivator ein herkömmliches Organosilan (z. B. Bis-3-(triethoxysilylpropyl)tetrasulfid) enthalten, das Hystereseverhalten und die Verstärkung des Gummiproduktes für heutige Anwendungsbereiche unzureichend beeinflussen. So werden heutzutage für die Herstellung von Fahrzeugreifen (z. B. Laufstreifen) Kautschukmischungen gefordert, die im vulkanisierten Zustand dem Reifen einen noch geringeren Rollwiderstand, der ein verringerten Kraftstoffverbrauch zur Folge hat, verleihen. Gleichzeitig sollen andere Eigenschaften wie Haltbarkeit oder Naßrutschverhalten möglichst nicht negativ beeinflußt werden.

Die Aufgabe der hier vorliegenden Erfindung besteht darin Kautschukmischungen bereitzustellen, die im vulkanisierten Zustand eine verbessertes Hystereseverhalten zeigen, so daß z. B. beim Einsatz dieser Kautschukmischungen in Reifen der Rollwiderstand verringert wird. Außerdem soll die Elastomermischung durch die Verwendung eines geeigneten Füllstoffsystems besser verstärkt werden.

Gelöst wird diese Aufgabe erfindungsgemäß dadurch, daß die Kautschukmischung

a) als weiteren Füllstoff ein Gel aufweist, das im wesentlichen aus einem Kautschuk besteht, eine Partikelgröße von $3 \cdot 10^{-9}$ bis $1 \cdot 10^{-6}$ m und einen Quellungsindex in Toluol von 1 bis 15 besitzt und dessen Oberfläche elektrophile Zentren aufweist und weiterhin

b) eine als Kupplungsagens zwischen den Gelpartikeln und dem ersten Füllstoff wirkende Substanz folgender Struktur:

$$\mathbf{X - R_1 - Si - (R_2)_3,}$$

wobei **X**: nucleophile Gruppe, insbesondere

$-NH_2,$
-SH,
$-NHR_3$ mit $R_3$= Alkylrest mit bis zu 3 Kohlenstoffatomen oder Phenylrest,

**$R_1$**: Alkylrest (verzweigt oder unverzweigt oder cyclisch mit insgesamt bis zu 6 Kohlenstoffatomen (wie z. B. $-CH_3$, $-C_2H_5$, $-C_6H_{10}$ (-Cyclohexyl), -Isobutyl)) oder Phenylrest

**$R_2$:** Alkylrest und Alkoxyrest oder nur Alkoxyrest,

wobei die Kohlenstoffkette verzweigt oder unverzweigt mit insgesamt bis zu 6 Kohlenstoffatomen, bevorzugt bis zu 3 Kohlenstoffatomen, ist und $R_2$ gleich oder verschieden voneinander sein können,

aufweist.

Es konnte festgestellt werden, daß Kautschukmischungen, die eine solche Kombination aus zumindest einem Füllstoff, dessen Oberfläche nucleophile Gruppen, insbesondere Hydroxylgruppen, aufweist und zumindest einem weiteren Füllstoff, der ein Gel ist und dessen Oberfläche elektrophile Zentren aufweist in Verbindung mit zumindest einem der genannten Kupplungsagenzien im vulkanisierten Zustand verbesserte Dämpfungseigenschaften bei gleichzeitig hervorragenden Spannungswerten besitzen. Solche Kautschukmischungen können daher insbesondere zur Herstellung von dynamisch stark beanspruchten Gummiartikeln eingesetzt werden, so daß die Lebensdauer dieser erhöht wird. Insbesondere bei der Verwendung dieser Kautschukmischung für Laufstreifen von Fahrzeugluftreifen konnte außerdem der Rollwiderstand verringert werden bei nahezu gleichbleibendem Naßrutschverhalten.

Das Gel besteht im wesentlichen aus einem Kautschuk, d. h. aus zumindest einer Kautschukkomponente (z. B. NR, BR, SBR, NBR) und gegebenfalls weiteren Zusatzstoffen, wie z. B. Alterungsschutzmitteln.

Die Herstellung der Polymermatrix des in der erfindungsgemäßen Kautschukmischung eingesetzten Gels, an dessen Oberfläche sich elektrophile Zentren befinden, kann auf folgende Weise erfolgen:

1. durch Copolymerisation von zumindest zwei Monomeren z. B. Polymerisation von Butadien mit p-Chlormethylstyrol
2. nachträgliche Funktionalisierung (z. B. durch Aufpropfen) eines Polymers z. B. Styrol-Butadien-Copolymer auf das p-Chlormethylstyrol aufgepfropft ist
3. nachträgliche Modifizierung eines Polymeres (z. B. durch Spaltung von Estergruppen) z. B. Polymerisation von Butadien mit Methacrylsäuremethylester und anschließender Hydrolyse

Die Herstellung der Gele erfolgt aus der Latexphase des Polymers und wird im folgenden näher beschrieben:

Nach entsprechender Koagulation des Kautschuklatex' der z. B. nach den obengenannten Verfahren 1 bis 3 hergestellt werden kann, wird dieser unter Zugabe eines Vernetzungsmittels (z. B. eines Peroxides (z. B. Dicumylperoxid)) z. B. in einem Autoklaven vernetzt. Es wird soviel Vernetzungsmittel zugegeben, daß der Quellungsindex des Gels (anmeldungsgemäß wird Latex, der durch Zugabe eines zusätzlichen Vernetzungsmittels zumindest vorvernetzt wird, als Gel bezeichnet) zwischen ca. 1 und 15, bevorzugt zwischen 1 und 10, eingestellt wird. Es ist aber auch möglich, die Oberfläche des Latex' nach Einstellung des Quellungsindexes (Herstellung des Gels) nach z. B. den obengenannten Verfahren 2 und 3 mit elektrophilen Zentren zu versehen. Weiterhin ist es möglich zur Latexphase oder auch zum Gel weitere Zusatzstoffe wie z. B. Alterungsschutzmittel zu geben. Das Gel wird entnommen, abfiltriert, gewaschen und bis zur Gewichtskonstanz getrocknet. Das erhaltene Gel weist eine Partikelgröße von 3 bis 1000 nm (bestimmt nach der Ultrazentrifugationsmethode DIN 53 206) auf.

Es besteht aber auch die Möglichkeit den vor- bzw. vemetzten Latex (Gel) gemeinsam mit unvernetzten Latex zu fällen (Erzeugung eines Masterbatches), so daß auf eine extra Isolierung des Gels verzichtet werden kann.

Der Quellungsindex ($Q_i$) der Gele wird aus dem Gewicht des lösungsmittelhaltigen Gels (nach Zentrifugation mit 20000 Upm) und dem Gewicht des trockenen Gels berechnet:

$$Q_i = \text{Naßgewicht des Gels / Trockengewicht des Gels}$$

Zur Ermittlung des Quellungsindex werden z. B. 250 mg Gel in 25 ml Toluol 24 Stunden unter Schütteln quellen gelassen. Das Gel wird abzentrifugiert (mit 20000 Upm) und gewogen (Naßgewicht) und anschließend bei 70 °C bis zur Gewichtskonstanz getrocknet und abermals gewogen (Trockengewicht).

An der Oberfläche der Gele befinden sich Gruppen, wie z. B. Halogene (bevorzugt Chlor, Brom), $-NH_2$, -OH, u. a. die ein positives (elektrophiles) Zentrum erzeugen, an dem ein nucleophiler Angriff (nucleophile Substitution) von X der angegebenen Kupplungsagenzien erfolgen kann.

Besonders bevorzugt ist, wenn das Gel mit p-Chlormethylstyrol modifizierter Styrol-Butadien-Kautschuk mit einem Quellungsindex in Toluol von 1 bis 15 und einer Partikelgröße von $3 \cdot 10^{-9}$ bis $1 \cdot 10^{-6}$m m ist.

Der zumindest an seiner Oberfläche nucleophile Gruppen, insbesondere Hydroxylgruppen, aufweisende Füllstoff ist bevorzugt z. B. Kieselsäure oder Ruß, dessen Oberfläche z. B. durch Behandlung mit Kieselsäure Silanolgruppen - und damit auch Hydroxylgruppen - aufweist. Die in der erfindungsgemäßen Kautschukmischung zur Anwendung kommende Kieselsäure ist aus dem Stand der Technik bekannt. So sollen Kieselsäure mit einer BET-Oberfläche von 145 - 270 $m^2$/g (ASTM D 5604), einer CTAB-Zahl von 120 - 285 $m^2$/g (ASTM D 3765) und einem Porenvolumen von 0,7-1,7 ml/g (DIN 66133) Verwendung finden. Als Kieselsäure kann somit z. B. *VN3* (Fa. Degussa AG, Deutschland) zum Einsatz kommen. Der Anteil der Kieselsäure in der Kautschukmischung beträgt vorteilhafterweise bis zu 110 phr, vorzugsweise 15 bis 60 phr.

Als Ruß, dessen Oberfläche Silanolgruppen aufweist, kann z. B. der Ruß *CRX 2000* der Fa. Cabot Corporation Billerica, USA verwendet werden. Auch dieser Füllstoff kann in einer Konzentration bis vorteilhafterweise 110 phr in der Kautschukmischung enthalten sein.

Des weiteren ist es auch möglich, nicht nur aktive Füllstoffe (Ruß und Kieselsäure), sondern auch inaktive Füllstoffe durch die eine fast durchweg stetige Veränderung des Eigenschaftsbildes der Gummimischung mit dem Grad der Füllung zu beobachten ist, an das Gel und somit auch an die Gummimatrix zu binden. So kann die Kautschukmischung als solch einen nucleophile Gruppen aufweisenden Füllstoff z. B. $Al(OH)_3$, Mineralien wie z. B. Kaolin, Glimmer oder andere Silicate enthalten.

Denkbar wären auch verschiedene nucleophile Gruppen auf dem Füllstoff. Prinzipiell ist es auch möglich mehrere solcher Füllstoffe in eine Kautschukmischung einzumischen, z. B. auch mit anderen Füllstoffen zu kombinieren.

Besonders bevorzugt ist, wenn in der Kautschukmischung bezogen auf 100 Teile der Gesamtkautschukmasse 10 bis 110 phr Gel und 10 bis 110 phr Kieselsäure enthalten sind.

Durch die Reaktion von $R_2$ des Kupplungsagens' mit den nucleophilen Gruppen des Füllstoffs wird unter Bildung einer chemischen Bindung eine feste Anknüfung erzielt. Über das Kupplungsagens ensteht somit ein stabiles System zwischen Gel und z. B. Kieselsäure.

Die Menge an zugegebenem Kupplungsagens richtet sich nach der Zahl der elektrophilen Zentren auf dem Gel, so daß z. B. ca. 25 bis 100 % der Anzahl der nucleophilen Gruppen des Füllstoffs mit dem Kupplungsagens eine chemische Bindung eingehen.

Als bevorzugte Beispiele für ein Kupplungsagens seien Substanzen wie z. B. Aminopropyltriethoxysilan oder 3-(2-Aminoethylamino)-propyl-trimethoxysilan genannt.

Durch die Zugabe des Kupplungsagens' (am Beispiel des Aminopropyltriethoxysilans) zu einer Kautschukmischung, die Kieselsäure und ein Gel, dessen Oberfläche p-Chlormethylstyrolgruppen aufweist, enthält, finden entsprechende Reaktionen statt, die nochmals verdeutlicht werden:

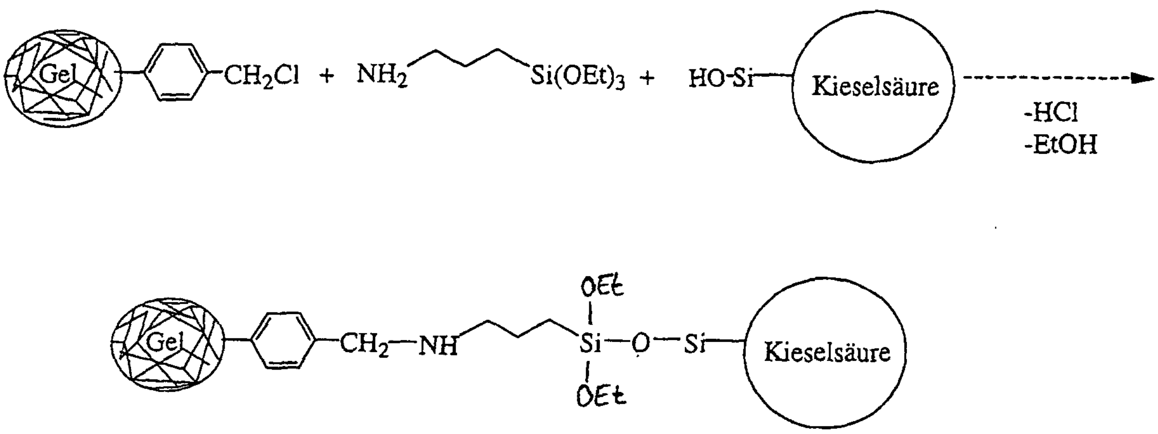


Diese feste Anbindung zwischen Gel und Füllstoff ermöglicht es - aufgrund der Anzahl der reaktiven Zentren des Gels und der Kieselsäure - daß in der Mischung ein Netzwerk ausgebildet wird:

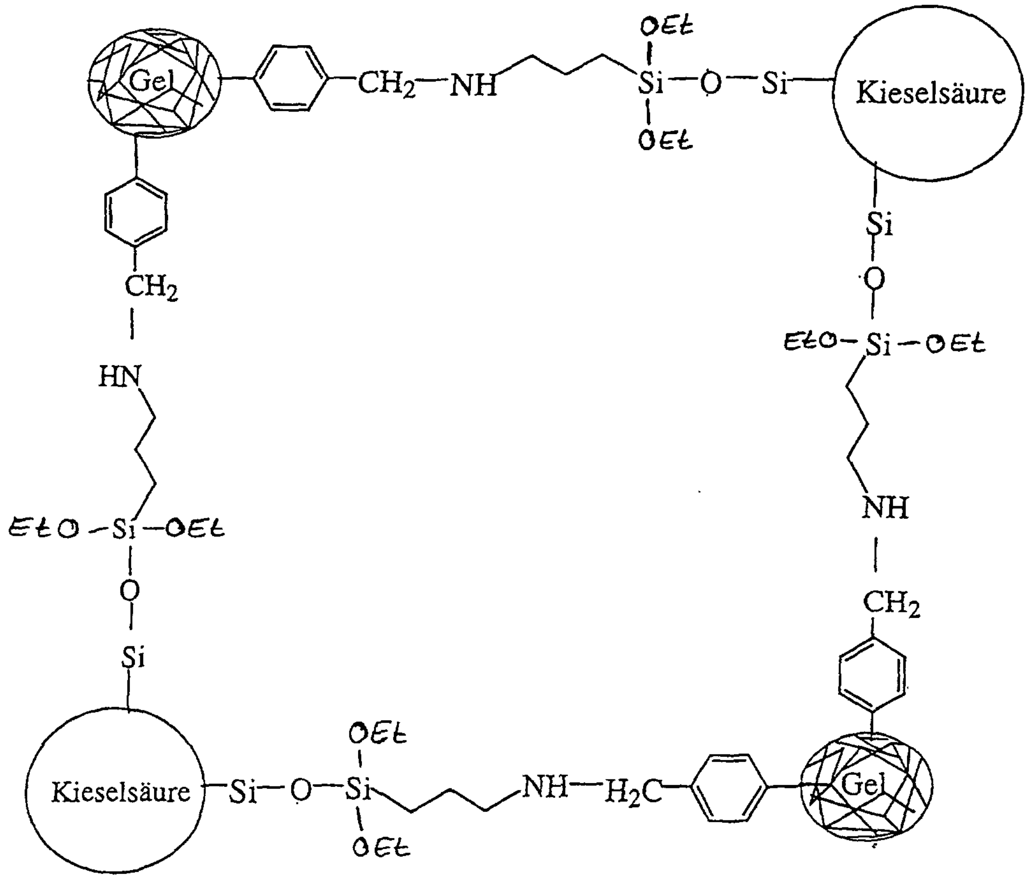

Des weiteren enthält die erfindungsgemäße Kautschukmischung übliche Zusatzstoffe wie Alterungsschutzmittel (z. B. 6PPD: N-Phenyl-N'-(1,3-dimethylbutyl)-p-phenylendiamin oder DTPD: N,N'-Ditoluyl-p-phenylendiamin), Verarbeitungshilfsmittel (z. B. Stearinsäure, Wachse, Fette, Dispergatoren) und Weichmacher (z. B. Phthalsäureester). Zu den üblichen Zusatzstoffen werden auch weitere Füllstoffe gezählt, dessen Oberfläche keine nucleophilen Gruppen aufweist, wie z. B. herkömmliche Ruße aus dem Stand der Technik. Die Ruße können folgende Charakteristika aufweisen: DBP-Zahl (ASTM-D 2414) 90 bis 200 $cm^3$/100 g und CTAB-Zahl (ASTM-D 3765) von 35 bis 220 $m^2$/g. Des weiteren können auch gewisse Anteile von unvernetzten Gelen bzw. Gelen die nicht die entsprechenden Charakteristika aufweisen in der Kautschukmischung enthalten sein, was bedingt durch das Gelherstellungsverfahren sein kann. Deren Anteil sollte aber möglichst gering gehalten werden, um die Eigenschaften des Vulkanisates nicht negativ zu beeinflussen.

Um die physikalischen Eigenschaften der Kautschukmischung weiter zu verbessern, ist es vorteilhaft, wenn zur Anbindung des nucleophile Gruppen aufweisenden Füllstoff an die Polymermatrix die Kautschukmischung einen Stoff aufweist, der dieses erleichtert. Wenn z. B. der nucleophile Gruppen aufweisende Füllstoff Kieselsäure ist, hat sich z. B. Bis-3-(triethoxysilylpropyl)tetrasulfid (TESPT) bzw. das entsprechende Disulfid bewährt.

Zur Vulkanisation der Kautschukmischung können Schwefel bzw. Schwefelspender (z. B.: DTDM-Dimorpholyldisulfid) verwendet werden. Es ist aber auch möglich die Vulkanisation unter Zuhilfenahme anderer Vulkanisationsmittel (z.B. Peroxide, Harze, Strahlung) ablaufen zu lassen. Außerdem werden vulkanisationsbeeinflussende Stoffe wie Beschleuniger oder Aktivatoren für die entsprechende Vulkanisationsart (z. B. für die Schwefelvulkanisation - z. B. CBS: Benzothiazyl-2-cyclohexylsulfenamid, TMTD: Tetramethylthiuramdisulfid, TBBS: Benzothiazyl-2-tert.-butylsulfenamid) der Kautschukmischung zugesetzt.

Die erfindungsgemäße Kautschukmischung enthält als Kautschukkomponente zumindest ein Polymer ausgewählt bevorzugt aus Naturkautschuk oder cis-Polyisopren mit einem cis-1,4-Anteil > 90 mol% oder Styrol-Butadien-Copolymer oder Polybutadien oder Mischungen hieraus.

Das Polyisopren kann durch stereospezifische Polymerisation in Lösung mit Ziegler-Natta-Katalysatoren (z. B. $TiCl_4/Al(Alkyl)_3$) oder unter Verwendung von fein verteiltem Lithiumalkylen (z. B. n-Butyllithium) erhalten werden. Bevorzugte Styrol-Butadien-Copolymere sind solche mit Gehalten an einpolymerisiertem Styrol von 18 bis 60, vorzugsweise 20 bis 50 Gew.%. Lösungs- oder Emulsionspolymerisate sind bevorzugt. Für die erfindungsgemäße Kautschukmischung soll weiterhin Polybutadien bevorzugt verwendet werden. Dabei ist es unerheblich nach welchen Verfahren dieses hergestellt worden ist.
Weiterhin kann die erfindungsgemäße Kautschukmischung ein oder mehrere aus dem Stand der Technik bekannte Kautschukkomponenten enthalten, z. B. folgende: Butylkautschuk (IIR), Acrylnitril-Butadien-Copolymer (NBR), hydriertes Acrylnitril-Butadien-Copolymer (HNBR), Ethylen-Propylen-Copolymer (EPM), Ethylen-Propylen-Dien-Terpolymer (EPDM) oder ein mit p-Brommethylstyrol modifiziertes Isobutylen Polymer.

Die Herstellung der erfindungsgemäßen Kautschukmischung kann auf unterschiedliche Weise erfolgen. So ist es möglich, das Gel in einem Masterbatch mit einer oder mehreren Kautschukkomponenten und gegebenenfalls weiteren üblichen Zusatzstoffen in einer ersten Mischstufe in das Mischaggregat zu geben. In einer zweiten Mischstufe kann der nucleophile Gruppen aufweisende Füllstoff zusammen mit dem Kupplungsagens und wiederum gegebenenfalls weiteren üblichen Zusatzstoffen in die Grundmischung gegeben werden. Es ist aber auch möglich, die Reihenfolge der Zugabe des Gels, des nucleophile Gruppen aufweisenden Füllstoffs und dem Kupplungsagens zu vertauschen. Nach der Fertigstellung der Grundmischung werden zu dieser nach einer eventuellen Zwischenlagerung die Vulkanisationsbestandteile gegeben und somit die Fertigmischung hergestellt. Nach der Formung eines Rohlings wird dieser der Vulkanisation unterzogen.

Wie bereits erwähnt, kann die erfindungsgemäße Kautschukmischung für die Herstellung von beanspruchten Gummiartikeln verwendet werden. Dazu zählen z. B. Luftfedern, Fördergurte, Riemen u. ä.

Besonders bevorzugt ist, wenn die erfindungsgemäße Kautschukmischung für die Herstellung von Bauteilen von Fahrzeugreifen Anwendung findet. So können z. B. Seitenwände, Verstärkungsschichten u. a. daraus hergestellt werden. Wiederum bevorzugt ist, wenn der Laufstreifen eines Fahrzeugreifens, insbesondere Fahrzeugluftreifen, aus der erfindungsgemäßen Kautschukmischung gefertigt wird. Dabei kann der Laufstreifen einteilig oder mehrteilig (Cap- und Base-Aufbau) aufgebaut sein. Besonders bei Verwendung der Kautschukmischung für den Laufstreifenteil, der mit der Fahrbahn in Berührung kommt (Cap), wirkt sich die erfindungsgemäße Kautschukmischung zusätzlich vorteilhaft auf den Rollwiderstand aus. Ansonsten weisen die Fahrzeugluftreifen einen herkömmlichen Aufbau hinsichtlich Konstruktion und Mischungszusammensetzung auf.

Anhand des folgenden Ausführungsbeispiels soll die Erfindung näher erläutert werden:

**Beispiel 1 - Gel A**

*Lipolan 4046* ist ein carboxylierter SBR-Latex der Fa. Polymer Latex GmbH, Deutschland. Er enthält 40 Gew. % Styrol, ist mit 2 Gew.% Acrylsäure carboxyliert und weist einen Feststoffgehalt von 53 Gew.% auf. Der Gelgehalt des Latex beträgt 95,9 Gew.%. Der Quellungsindex des Gelanteils beträgt 7,7 % (Naßgewicht/Trockengewicht in Toluol). Die Latexteilchen haben einen Durchmesser (Ultrazentrifuge) von $d_{10}$ = 110 nm, $d_{50}$ = 192 nm und $d_{80}$ = 212 nm. Die Dichte der Latexteilchen beträgt 0,9744 g/$cm^3$. Die Glastemperatur des SBRs beträgt- 33,5 °C.

Für die Nachvernetzung mit Dicumylperoxid (DCP) wird der Latex auf eine Feststoffkonzentration von 30 Gew.% verdünnt und in einen Autoklaven gefüllt. DCP wird in fester Form bei Raumtemperatur zugegeben (1 phr bezogen auf Festprodukt). Durch Aufheizen des Latex auf 60 °C wird das DCP aufgeschmolzen und unter Rühren gut im Latex verteilt. Zur Entfernung von Sauerstoff wird der Reaktorinhalt bei 60 °C unter Rühren evakuiert und Stickstoff aufgepreßt. Der Evakuierungs/Stickstoff-Begasungszyklus wird 3 mal wiederholt. Danach wird der Reaktor auf 150 °C aufgeheizt. Um Latexanbackungen beim Aufheizen zu vermeiden, wird darauf geachtet, daß die Differenz zwischen Mantelund Innentemperatur 10 °C nicht übersteigt. Nach dem Aufheizen wird die Innentemperatur 45 min bei mindestens 150 °C gehalten. Danach wird das erhaltene Gel abgekühlt und über ein Monodurtuch filtriert.

Durch die Nachvernetzung mit DCP steigt die Glastemperatur auf -26,5 °C. Die Teilchengröße wird durch die Nachvernetzung praktisch nicht beeinflußt.

Um eine gute Verteilung der Gele in der späteren Kautschukmatrix sicherzustellen, wird das Gel-Latex mit NR zu einem NR-Masterbatch aufgearbeitet, wonach ein NR/Gel-Gewichtsverhältnis von 50/50 eingestellt wird.

Als NR-Masterbatchkomponente wird *Taytex* mit einer Feststoffkonzentration von 61 Gew.% (Importeur: Theodor Durrieu, Hamburg, Deutschland) verwendet.

Vor dem Vermischen des Gels mit dem NR-Latex wird dieser durch Zugabe von 5 Gew.% bezogen auf das Gewicht des NR-Latex' an 5%iger *Dresinate 731-Lösung* (Natriumsalz der disproportionierten Abietinsäure der Fa. Hercules, Wilmington, USA) versetzt. Danach wird der NR- Latex mit dem Gel 10 min unter intensivem Rühren bei Raumtemperatur gemischt.

Nach der Herstellung der NR-Latex/Gelmischung wird eine Alterungsschutzmitteldispersion zugegeben. Hierfür wird eine 10%ige wässrige Dispersion eines aminischen Alterungsschutzmittels verwendet. Zur Stabilisierung von 1 kg Festprodukt verwendet man: 50 g einer Dispersion aus *Vulkanox* (N-Isopropyl-N -phenyl-p-phenylen-diamin/Fa. Bayer AG, Deutschland) 0,0913 g NaOH und 0,45 g Emulgator *T 11* (teilhydrierte Talgfettsäure/Fa. Procter & Gamble, Cincinnati, USA) und 0,193 g *Oulu GP 331* (unmodifizierte Harzsäure/Fa. Veitsiluto, Oulu, Finnland).

Zur Koagulation wird die stabilisierte NR-Latex/Gelmischung in eine auf 60 °C erhitzte Elektrolytlösung eingerührt, wobei zur Koagulation von 1 kg Festprodukt (NR-Latex/Gelmischung) eine Elektrolytlösung aus 10 Wasser; 75 g Kochsalz; 13,6 g Al-Sulfat 18 Kristallwasser; 1,5 g Gelatine vorgelegt werden. Während der Koagulation wird der pH-Wert mit 10%iger Schwefelsäure bei pH = 4,0 gehalten.

Das Produkt wird abfiltriert und mit ca. 40 l Lewatitwasser nachgewaschen und bei 70 °C im Vakuumtrockenschrank getrocknet. Erhalten wird somit Gel A/NR-Masterbatch.

**Beispiel 2 - Gel B**

Gel B wird ausgehend von dem SBR-Latex *Baystal 1357/4* der Polymer Latex GmbH, Deutschland (früher: Bayer France, Port Jérôme) durch Nachvernetzung mit 1,5 phr Dicumylperoxid und durch Pfropfung mit 5 phr Chlormethylstyrol hergestellt. Das Gel wird in reiner Form, d.h. ohne Anwendung der Masterbatchtechnologie, isoliert.

*Baystal 1357/4* ist ein nichtcarboxylierter SBR-Latex mit einem Styrolgehalt von 22 Gew.% und einem Feststoffgehalt von 38 Gew.%. Der Gelgehalt des Latex' beträgt 75 Gew.% und der Quellungsindex des vergelten Anteils beträgt 61 (Naßgewicht/Trockengewicht in Toluol). Die Latexteilchen haben einen Durchmesser von $d_{10}$ = 50 nm, $d_{50}$= = 56 nm und $d_{80}$ = 60 nm. Die Dichte der Latexteilchen beträgt 0,9281 g/cm$^3$. Die Glastemperatur des SBRs liegt bei -57 °C.

Durch die Nachvernetzung mit DCP wird die Teilchengröße des Gels praktisch nicht mehr beeinflußt; der Gelgehalt steigt auf 97,5 Gew.% und die Dichte auf 0,9717 g/cm$^3$; der Quellungsindex nimmt auf 5,4 % ab und die Glastemperatur steigt auf -26,5 °C.

Im Anschluß an die Nachvernetzung wird das Gel mit 5 phr Chlormethylstyrol bepfropft. Hierzu wird das Gel mit dem Na-Salz eines Alkylsulfonats (*Mersolat K 30* der Bayer AG, Deutschland) nachstabilisiert (0,75 % bezogen auf Gel-Feststoff) und mit Wasser auf eine Feststoffkonzentration von 22 % verdünnt. Bei Raumtemperatur gibt man bezogen auf Gel-Feststoff 5 phr Chlormethylstyrol (Fa. Dow Chemical, Stade, Deutschland) und 0,2 % bezogen auf Gel-Feststoff an 50%igem p-Menthanhydroperoxid (*Triganox NT 50* der Fa. Akzo Nobel, Arnheim, Niederlande) sowie eine 13,4%ige (0,09 % bezogen auf Gel-Feststoff) wässrige Lösung des Na-Salzes von 1-Hydroxymethansulfinsäure-Dihydrat (*Rongalit*, Fa. BASF AG, Deutschland) zu und heizt unter Rühren auf 70 °C auf. Die Innentemperatur wird so lange bei 70 °C gehalten, bis ein Endfeststoffgehalt, der einem 100%igem Polymerisationsumsatz entspricht, erreicht ist (ca. 1 h). Während der Reaktion wird der pH-Wert der Reaktionsmischung durch Zutropfen einer 1 N wässrigen Natriumhydroxidlösung bei 10 gehalten.

Vor der Isolierung des Gels wird dieses mit einer Dispersion phenolischer Alterungsschutzmittel versetzt, wobei auf 100 g Latex-Feststoff 1,3 g der Dispersion eingesetzt werden (0,65 Gew.% bezogen auf Latex-Feststoff). Die Stabilisator-Dispersion enthält auf 10,8 Gew.-Teile Lewatitwasser und 1,2 Gew.-Teile Emulgator *NP 10* (ethoxyliertes Nonylphenol/Fa. Bayer AG, Deutschland), 1 Gew.-Teil *Vulkanox ZKF* (2,2-Methylen-bis-(4-methyl-6-cyclohexylphenol)/Fa. Bayer AG, Deutschland), 4 Gew.-Teile *Vulkanox KB* (2,6-Di-t-butyl-4-Methylphenol/Fa. Bayer AG, Deutschland), 7 Gew.-Teile *Irganox PS 800* (Fa. Ciba Geigy, Schweiz) und wird durch Ultraturrax-Dispergierung der Alterungsschutzmittelmischung in der auf 95 °C erhitzten wässrigen *NP 10*-Lösung hergestellt.

Zur Isolierung von 100 g des Gels B wird das mit Alterungsschutzmittel versetzte Gel in eine auf 65 °C erhitzte Fällflotte bestehend aus: 1245 g Lewatitwasser, 46,8 g Kochsalz und 25 g 1%iges Fällhilfsmittel (*Superfloc C 567 Flocculant* / Fa. Cytec Industrie, USA), die mit 10%iger Schwefelsäure auf pH 4 eingestellt ist, eingerührt. Während der Koagulation wird die Flotte durch Zugabe weiterer 10%iger Schwefelsäure bei pH 4,0 ± 0,5 gehalten. Das koagulierte Produkt wird 2 mal je 30 Minuten bei 65 °C gewaschen, wobei jeweils die 5fache Menge an Wasser bezogen auf Kautschuk eingesetzt wird. Nach der Trocknung wird das Gel B erhalten.

Nach der Pfropfung beträgt der elementaranalytisch bestimmte Chlorgehalt 0,4 Gew.%. Durch die Pfropfung wird die Lage der Glastemperatur nicht beeinflußt.

**Beispiel 3 - Gel C**

Gel C wird ausgehend von dem SBR-Latex *Baystal 1357* (Fa. Polymer Latex GmbH, Deutschland) durch Nachvernetzung mit 1,5 phr Dicumylperoxid und durch anschließende Pfropfung mit 10 phr Chlormethylstyrol hergestellt. Vor der Pfropfung wird die Kolloidstabilität des Gels durch den Zusatz von 1,5 Gew.% an *Mersolat K 30* (Fa. Bayer AG, Deutschland) verbessert. Die Aktivierung der Polymerisation erfolgt mit 0,4 Gew.% an *Triganox NT50 (* Fa. Akzo Nobel, Arnheim, Niederlande) und mit 0,18 Gew.% an *Rongalit* (Fa. BASF, Deutschland). Das Polymergel wird, wie bei Gel B beschrieben, stabilisiert und in reiner Form, d. h. ohne Anwendung der Masterbatchtechnolgie, aus dem Latex isoliert.

Nach der Pfropfung enthält das Gel C 1 Gew.% Chlor. Es hat einen Gelgehalt von 98 Gew.%, einen Quellungsindex von 3,8 und eine Glastemperatur von -24 °C.

**Beispiel 4 - Gel D**

Gel D wird ausgehend von einem SBR-Latex mit 39 Gew.% Styrol (Bayer AG, Leverkusen, Deutschland), $d_{10}$ = 108 nm; $d_{50}$= = 125 nm; $d_{80}$= 135 nm; Gelgehalt: 95,5 Gew.%; Quellungsindex: 13,5; Glastemperatur: -34 °C durch Nachvernetzung mit 1,2 phr Dicumylperoxid und durch Pfropfung mit 3 phr Chlormethylstyrol hergestellt. Der vorvernetzte und modifizierte Latex wird, wie bei Gel A beschrieben, stabilisiert und kann als 50%iger NR-Masterbatch aufgearbeitet werden.

In der folgenden Tabelle 1 wurde eine Kautschukmischung auf herkömmliche Art und Weise hergestellt, wobei das Gel B als Füllstoff eingesetzt worden ist:

Tabelle 1

| | ***Referenz- Stand der Technik [phr]*** | ***Referenz [phr]*** | ***Erfindungsgemäße Mischungen [phr]*** |
|---|---|---|---|
| **Bestandteile** | **1** | **2** | **3** |
| Naturkautschuk | 100 | 100 | 100 |
| Gel B | -- | 30 | 30 |
| Kieselsäure VN3** | 50 | 20 | 20 |
| Silan Si 69** | 4 | 1,6 | 1,6 |
| Aminopropyltriethoxysilan | -- | -- | 0,55* |
| Alterungsschutzmittel 6PPD | 1 | 1 | 1 |
| Zinkoxid | 3 | 3 | 3 |
| Stearinsäure | 2 | 2 | 2 |
| Schwefel | 1,65 | 1,65 | 1,65 |
| Beschleuniger TBBS | 1 | 1 | 1 |
| Beschleuniger DPG | 1 | 1 | 1 |

* (d. h. ca. 25 % der Anzahl der elektrophilen Zentren des Gels gehen mit dem Kupplungsagens eine Bindung ein)

*** Fa. Degussa AG, Deutschland*

Die Einheit phr bezieht sich auf 100 Teile des Gewichtes der gesamten Kautschukkomponenten.

Die Kautschukmischung wurde bei 150 °C 30 min vulkanisiert.

Tabelle 2

| | ***Referenz- Stand der Technik*** | ***Referenz*** | ***Erfindungsgemäße Mischungen*** |
|---|---|---|---|
| **Eigenschaften** | **1** | **2** | **3** |
| Reißfestigkeit [MPa] DIN 53504 | 22,2 | 19,8 | 21 |
| Spannungswert 100% [MPa] DIN 53504 | 1,42 | 1,98 | 2,1 |
| Spannungswert 300 % [MPa] DIN 53504 | 7,24 | 9,3 | 10,19 |
| Härte [Shore A] DIN 53505 | 57 | 57 | 58 |
| Rückprallelastizität [%] 23 °C DIN 53512 | 54 | 56 | 57 |
| Rückprallelastizität [%] 70 °C DIN 53512 | 60 | 69 | 71 |

Aus der Tabelle 2 geht hervor, daß die Rückprallelastizitätswerte 70 °C der Mischungen 2 und 3 im Vergleich

zur Mischung 1 drastisch erhöht werden konnten, bei gleichbleibendem Niveau der Rückprallelastizitätswerte bei 23 °C. Somit wird deutlich, daß eine Verbesserung des Hystereseverhaltens zu verzeichnen ist. Gleichzeitig konnten bei der erfindungsgemäßen Mischung 3 höhere Spannungswerte ermittelt werden. Diese Charakteristik gibt eine Aussage über die Steifigkeit des vulkanisierten Produktes und auch über die Haltbarkeit.
Wenn diese Kautschukmischung (Mischung 3) zur Herstellung von Laufstreifen für Fahrzeugreifen verwendet wird, bedeutet das eine erhöhte Steifigkeit z. B. der Profilklotzflanken, was zu einer besseren Traktion führt. Aus den Werten der Rückprallelastizität geht hervor, daß die erfindungsgemäße Mischung einen verringerten Rollwiderstand (erhöhte Werte der Rückprallelastizität bei 70 °C) bei gleichbleibendem Naßrutschverhalten (Werte für Rückprallelastitizät bei 23 °C) aufweisen. Es können also insbesondere Fahrzeugluftreifen bereitgestellt werden, deren Dämpfungseigenschaften optimiert und deren Traktion sowie Lebensdauer verbessert wurde.

## Patentansprüche

1. Kautschukmischung, die zumindest eine Kautschukkomponente und zumindest einen ersten Füllstoff, dessen Oberfläche nucleophile Gruppen, insbesondere OH-gruppen, aufweist sowie weiterhin übliche Zusatzstoffe enthält, **dadurch gekennzeichnet, daß** die Kautschukmischung

   a) als weiteren Füllstoff ein Gel aufweist, das im wesentlichen aus einem Kautschuk besteht, eine Partikelgröße von $3 \cdot 10^{-9}$ bis $1 \cdot 10^{-6}$ m und einen Quellungsindex in Toluol von 1 bis 15 besitzt und dessen Oberfläche elektrophile Zentren aufweist und weiterhin
   b) eine als Kupplungsagens zwischen den Gelpartikeln und dem ersten Füllstoff wirkende Substanz folgender Struktur:

   $$\mathbf{X - R_1 - Si - (R_2)_3,}$$

   aufweist,
   wobei

   **X:** nucleophile Gruppe, insbesondere

   $-NH_2$,
   -SH,
   $-NHR_3$ mit $R_3$ = Alkylrest mit bis zu 3 Kohlenstoffatomen oder Phenylrest,

   **$R_1$:** Alkylrest (verzweigt oder unverzweigt oder cyclisch mit insgesamt bis zu 6 Kohlenstoffatomen) oder Phenylrest
   **$R_2$:** Alkylrest und Alkoxyrest oder nur Alkoxyrest,

   wobei die Kohlenstoffkette verzweigt oder unverzweigt mit insgesamt bis zu 6 Kohlenstoffatomen ist und $R_2$ gleich oder verschieden voneinander sein können.

2. Kautschukmischung nach Anspruch 1, **dadurch gekennzeichnet, daß** die Substanz Aminopropyltriethoxysilan ist.

3. Kautschukmischung nach Anspruch 1, **dadurch gekennzeichnet, daß** die Substanz 3-(2-Aminoethylamino)-propyl-trimethoxysilan ist.

4. Kautschukmischung nach zumindest einem der vorhergehenden Ansprüche, **dadurch gekennzeichnet, daß** die nucleophilen Gruppen des ersten Füllstoffs Silanolgruppen sind.

5. Kautschukmischung nach zumindest einem der vorhergehenden Ansprüche, **dadurch gekennzeichnet, daß** der Silanolgruppen aufweisende Füllstoff Kieselsäure ist.

6. Kautschukmischung nach zumindest einem der vorhergehenden Ansprüche, **dadurch gekennzeichnet, daß** der Silanolgruppen aufweisende Füllstoff Ruß ist, an dessen Oberfläche sich Silanolgruppen befinden.

7. Kautschukmischung nach zumindest einem der vorhergehenden Ansprüche, **dadurch gekennzeichnet, daß** das

Gel ein mit p-Chlormethylstyrol modifizierter Styrol-Butadien-Kautschuk mit einem Quellungsindex von 1 bis 15 Gewichtsprozent und einer Partikelgröße von $3 \cdot 10^{-9}$ bis $1 \cdot 10^{-6}$ m ist.

**8.** Kautschukmischung nach zumindest einem der vorhergehenden Ansprüche, **dadurch gekennzeichnet, daß** die Kautschukkomponente ausgewählt ist aus Naturkautschuk und/oder synthetischem Polyisopren und/oder Styrol-Butadien-Copolymer und/oder Polybutadien.

**9.** Kautschukmischung nach zumindest einem der vorhergehenden Ansprüche, **dadurch gekennzeichnet, daß** in der Kautschukmischung bezogen auf 100 Teile der Gesamtkautschukmasse 10 bis 110 phr Gel und 10 bis 110 phr Kieselsäure enthalten sind.

**10.** Verwendung der Kautschukmischung nach zumindest einem der vorhergehenden Ansprüche für die Herstellung von Fahrzeugluftreifen, insbesondere für deren Laufstreifen.

**Claims**

**1.** Rubber mixture, which mixture contains at least one rubber component and at least one first filler, the surface of which includes nucleophilic groups, more especially OH groups, and also contains conventional additives, **characterised in that** the rubber mixture

a) includes, as an additional filler, a gel which is substantially formed from a rubber, has a particle size of $3 \cdot 10^{-9}$ to $1 \cdot 10^{-6}$ m and a swelling index in toluene of 1 to 15, and the surface of which gel includes electrophilic centres, and the rubber mixture also includes
b) a substance, which acts as a coupling agent between the gel particles and the first filler and has the following structure:

$$\mathbf{X - R_1 - Si - (R_2)_3,}$$

wherein

**X** may be: a nucleophilic group, more especially

$-NH_2$,
-SH,
$-NHR_3$ with $R_3$ = an alkyl
residue having up to 3 carbon atoms or a phenyl residue,

**$R_1$** may be: an alkyl residue (branched or unbranched or cyclic with a total of up to 6 carbon atoms) or a phenyl residue, and
**$R_2$** may be: an alkyl residue and an alkoxy residue or only an alkoxy residue,

the carbon chain being branched or unbranched with a total of up to 6 carbon atoms, and $R_2$ being able to be identical to one another or different from one another.

**2.** Rubber mixture according to claim 1, **characterised in that** the substance is aminopropyltriethoxysilane.

**3.** Rubber mixture according to claim 1, **characterised in that** the substance is 3-(2-aminoethylamino)-propyl-trimethoxysilane.

**4.** Rubber mixture according to at least one of the preceding claims, **characterised in that** the nucleophilic groups of the first filler are silanol groups.

**5.** Rubber mixture according to at least one of the preceding claims, **characterised in that** the filler, which includes silanol groups, is silica.

**6.** Rubber mixture according to at least one of the preceding claims, **characterised in that** the filler, which includes

silanol groups, is carbon black, silanol groups being situated on the surface of said filler.

7. Rubber mixture according to at least one of the preceding claims, **characterised in that** the gel is a styrene-butadiene rubber, which is modified with p-chloromethyl styrene and has a swelling index of 1 to 15 percent by weight and a particle size of $3 \cdot 10^{-9}$ to $1 \cdot 10^{-6}$ m.

8. Rubber mixture according to at least one of the preceding claims, **characterised in that** the rubber component is selected from natural rubber and/or synthetic polyisoprene and/or styrene-butadiene copolymer and/or polybutadiene.

9. Rubber mixture according to at least one of the preceding claims, **characterised in that** 10 to 110 phr gel and 10 to 110 phr silica are contained in the rubber mixture relative to 100 parts of the total rubber composition.

10. Use of the rubber mixture, according to at least one of the preceding claims, for the production of pneumatic vehicle tyres, more especially for the tread strips thereof.

**Revendications**

1. Composition de caoutchouc comprenant au moins un composant en caoutchouc et au moins un premier agent de charge, dont la surface présente des groupes nucléophiles, principalement des groupes OH, et comprenant en outre des adjuvants traditionnels, **caractérisée en ce que** la composition de caoutchouc

    a. présente comme autre agent de charge un gel, composé principalement d'un caoutchouc, présentant une taille de particules entre $3.10^{-9}$ et $1.10^{-6}$ m et un taux de gonflement dans le toluène de 1 à 15, et dont la surface présente des centres électrophiles ainsi qu'en outre
    b. une substance fonctionnant comme agent de couplage entre les particules de gel et le premier agent de charge dont la structure est la suivante :

$$X\text{-}R_1\text{-}Si\text{-}(R_2)_3$$

    dans laquelle X : groupe nucléophile,
        en particulier $-NH_2$
        -SH
        $-NHR_3$ où $R_3$ = résidu alkyle avec jusqu'à 3 atomes de carbone ou résidu phényle,
        $R_1$ : résidu alkyle (ramifié, non ramifié ou cyclique comprenant au total jusqu'à 6 atomes de carbone) ou résidu phényle.
        $R_2$ : résidu alkyle et résidu alcoxy ou uniquement résidu alcoxy, dont la chaîne carbonée est ramifiée ou non ramifiée et comprend au total jusqu'à 6 atomes de carbone et les groupes $R_2$ pouvant être identiques ou différents l'un par rapport à l'autre.

2. Composition de caoutchouc selon la revendication 1, **caractérisée en ce que** la substance est un aminopropyltriéthoxysilane.

3. Composition de caoutchouc selon la revendication 1, **caractérisée en ce que** la substance est du 3-(2-aminoéthylamino)propyltriméthoxysilane.

4. Composition de caoutchouc selon au moins l'une quelconque des revendications précédentes, **caractérisée en ce que** les groupes nucléophiles du premier agent de charge sont des groupes silanols.

5. Composition de caoutchouc selon au moins l'une quelconque des revendications précédentes, **caractérisée en ce que** l'agent de charge présentant des groupes silanols est de l'acide silicique.

6. Composition de caoutchouc selon au moins l'une quelconque des revendications précédentes, **caractérisée en ce que** l'agent de charge présentant des groupes silanols est du noir de carbone, sur les surfaces duquel se trouvent des groupes silanols.

7. Composition de caoutchouc selon au moins l'une quelconque des revendications précédentes, **caractérisée en ce que** le gel est un caoutchouc styrène-butadiène modifié à l'aide de p-chlorométhylstyrène avec un taux de gonflement de 1 à 15 % en poids et une taille de particules de $3.10^{-9}$ à $1.10^{-6}$ m.

8. Composition de caoutchouc selon au moins l'une quelconque des revendications précédentes, **caractérisée en ce que** le composant de caoutchouc est choisi parmi le caoutchouc naturel et/ou le polyisopropène synthétique et/ou le copolymère styrène-butadiène et/ou le polybutadiène.

9. Composition de caoutchouc selon au moins l'une quelconque des revendications précédentes, **caractérisée en ce que** 10 à 110 phr de gel et 10 à 110 phr d'acide silicique sont contenus dans la composition de caoutchouc par rapport à 100 parties de la masse totale du caoutchouc.

10. Utilisation de la composition de caoutchouc selon au moins l'une quelconque des revendications précédentes pour la fabrication de pneumatiques de voitures, et plus particulièrement de bandes de roulement.